# NEUE EUROPÄISCHE PATENTSCHRIFT

(11) **EP 2 917 034 B2**
(45) Veröffentlichungstag und Bekanntmachung des Hinweises auf die Entscheidung über den Einspruch: **12.07.2023**
(45) Hinweis auf die Patenterteilung: 07.09.2016
(21) Anmeldenummer: 13789487.9
(22) Anmeldetag: 08.11.2013
(51) Int. Cl.: B32B 27/10, B32B 27/32, B32B 27/30

(54) **LEBENSMITTELVERPACKUNG ENTHALTEND EINE FOLIE MIT BARRIERE-EIGENSCHAFTEN GEGEN MINERALÖLE**
FOODSTUFFS PACKAGING CONTAINING A FILM WITH PROPERTIES PROVIDING A BARRIER TO MINERAL OILS
EMBALLAGE DE PRODUIT ALIMENTAIRE CONTENANT UNE FEUILLE AYANT DES PROPRIÉTÉS DE BARRIÈRE AUX HUILES MINÉRALES

(30) Priorität: 12.11.2012 EP 12007669
(43) Veröffentlichungstag der Anmeldung: 16.09.2015
(73) Patentinhaber: Treofan Germany GmbH & Co. KG, 66539 Neunkirchen (DE)
(72) Erfinder: HÄDE, Petra, 66287 Quierschied (DE); DÜPRE, Yvonne, 67677 Enkenbach-Alsenborn (DE); GOTTFREUND, Thomas, 66386 St. Ingbert (DE)
(74) Vertreter: Mai Besier
(86) Internationale Anmeldenummer: PCT/EP2013/003369
(87) Internationale Veröffentlichungsnummer: WO 2014/072066

(56) Entgegenhaltungen:
- EP-A1- 2 476 551
- WO-A1-2013/083504
- WO-A2-2012/163749

## Beschreibung

Die vorliegende Erfindung betrifft eine Lebensmittelverpackung enthaltend eine Folie auf Basis von Polyolefinen, welche Barriere-Eigenschaften gegen Mineralöle aufweist.

Folien auf Basis von Polyolefinen, insbesondere biaxial orientierte Polypropylenfolien (boPP), werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Die Polypropylenfolien können sowohl als transparente Folien als auch als opake Folien eingesetzt werden.

Die vorstehenden Folien werden häufig auch in Kombination mit anderen Verpackungsmaterialien eingesetzt, insbesondere im Bereich von Lebensmitteln.

Für Lebensmittelverpackung werden häufig Kartonagen eingesetzt, die aufgrund ihrer Verfügbarkeit häufig als Recyclingkarton vorliegen. Hierbei treten Probleme auf, da Recyclingkartons typischerweise 300-1000 mg/kg Mineralöl mit einer relativ geringen molaren Masse (hauptsächlich n-C18 bis n-C22) und einem Gehalt von aromatischen Anteilen zwischen 15-20 % enthalten (Stellungnahme Nr. 008/2010 des Bundesinstitutes für Risikobewertung "BfR" vom 09.12.2009).

Bei den in den Recyclingkartons nachgewiesenen Mineralölgemischen handelt es sich um paraffinartige (offenkettige, meist verzweigte) und naphthenartige (zyklische) Kohlenwasserstoffe, die als "mineral oil saturated hydrocarbons" (MOSH) bezeichnet werden, sowie um aromatische Kohlenwasserstoffe, "mineral oil aromatic hydrocarbons" (MOAH), die vor allem aus hoch alkylierten Systemen bestehen (vgl. Biedermann M, Fiselier K, Grob K, 2009, "Aromatic hydrocarbons of mineral oil origin in foods: Method for determining the total concentration and first results. Journal of Agricultural and Food Chemistry 57: 8711-8721.

Insofern keine geeigneten Vorsichtsmaßnahmen, z.B. durch eine Metallisierung des Kartons, getroffen werden, besteht somit die Gefahr, dass die vorstehend bezeichneten Mineralölgemische das zu verpackende, bzw. verpackte Lebensmittel kontaminieren.

Erste Ansätze Folien auf Basis von Polyolefin-Folien, insbesondere biaxial orientierte Polypropylenfolien (boPP), als Barriere gegen vorstehend bezeichneten Mineralölgemische einzusetzen zeigen, dass die Polyolefinfolien alleine die Migration nicht wirksam verhindern. Die Folien benötigen somit eine zusätzliche Ausrüstung, um als Barriere gegen die vorstehend bezeichneten Mineralölgemische zu wirken.

Geeignet sind beispielsweise Folien, die eine Metallsierung mit einer hinreichenden optischen Dichte aufweisen. Diese Metallschicht bildet eine wirksame Barriere gegen die Mineralöle. Für einige Anwendungen sind jedoch derartige Metallschichten aus optischen Gründen oder aus Kostengründen nicht erwünscht. Insbesondere können diese Metallschichten nicht eingesetzt werden, wenn die Folienverpackung transparent sein soll. Des Weiteren hängt die Wirkung als Barriere auch von der Qualität der Beschichtung ab, so daß nur eine hochwertige teure Metallisierung diesen Zweck erfüllt.

Aufgabe der vorliegenden Erfindung war es, eine Folie auf Basis von biaxial orientierte Polypropylenfolien (boPP), für Lebensmittelverpackungen aus Recyclingkartons bereitzustellen, die eine ausreichende Barriere gegen Mineralölgemische aufweist und gleichzeitig die guten anwendungstechnischen Eigenschaften beibehält, so dass eine Kontamination des zu verpackenden, bzw. verpackten Lebensmittels durch das im Recyclingkarton vorhandene Mineralölgemisch vermieden wird.

Gegenstand der vorliegenden Erfindung ist somit eine Lebensmittelverpackung umfassend:
a) ein Lebensmittel,
b) eine Folie auf Basis von Polyolefinen, welche das Lebensmittel einschließt,
c) ein Karton auf Basis eines Recyclingkartons, welcher die Folie auf Basis von Polyolefinen, enthaltend das Lebensmittel einschließt,
dadurch gekennzeichnet, dass die Folie auf Basis von Polyolefinen, mindestens eine Beschichtung umfassend (i) Acrylatpolymer, wobei es sich um Acrylat-Homopolymere und/oder Acrylat-Copolymere auf Basis von Methylmethacrylat und/oder Ethylacrylat handelt, wobei die Menge an Beschichtung pro Seite der Folie nach Trocknung zwischen 0,5 und 1,5 g/m² für Beschichtungsmaterialien auf Basis von Acrylat beträgt und die Schichtdicke 1 bis 1,5µm beträgt, und/oder (ii) halogenhaltige Vinyl- und/oder Vinylidenpolymere, wobei die Menge an Beschichtung pro Seite der Folie nach Trocknung zwischen 2,5 und 4 g/m² für Beschichtungsmaterialien auf Basis von halogenhaltigen Vinyl- und/oder Vinylidenpolymeren beträgt, wobei die vorstehende Menge die sekundäre Primerschicht auf Basis von Vinylacetat/Acrylat mitumfasst, und die Schichtdicke 1,5 bis 2,0µm beträgt, und/oder (iii) Polymere basierend auf Vinyl-Alkohol (VOH) aufweist, wobei die Menge an Beschichtung pro Seite der Folie nach Trocknung zwischen 0,5 und 1,0 g/m² für Beschichtungsmaterialien aus Polymeren basierend auf Vinyl-Alkohol (VOH), beträgt und die Schichtdicke 1 bis 1.5µm beträgt, und die Beschichtung zumindest auf der Seite der Folie vorliegt, die dem Karton auf Basis eines Recyclingkartons zugewandt ist, wobei die Folie auf Basis von Polyolefin eine biaxial orientierte Polypropylenfolie (boPP) ist und die Folie ein- oder beidseitig einen Haftvermittler aus Polyethylenimin aufweist, auf welchen die Beschichtung/en aufgebracht ist/sind.

Die erfindungsgemäße Lebensmittelverpackung benötigt keine durch Metallisierung von Oberflächen hervorgerufenen Barriereschichten und ist somit kostengünstiger zu realisieren als beispielsweise ein metallisierter Karton oder eine metallisierte Folie. Zusätzlich ermöglicht die Erfindung bei Verwendung von transparenten Ausführungsformen neuartige Verpackungen, die bislang aufgrund der Metallisierung nicht möglich waren.

Die Erfindung kann durch unterschiedlich gestaltete Lebensmittelverpackungen realisiert werden. In einer Ausführungsform werden mit an sich bekannten Technologien Beutelverpackungen oder Einschlagverpackungen hergestellt, welche das Lebensmittel enthalten. Die befüllte Beutel- oder Einschlagverpackung wird dann in einer weiteren umhüllenden Kartonverpackung verpackt. Die Beschichtung auf der Außenseite der Beutel- oder Einschlagverpackung verhindert die Migration der Mineralöle aus dem Karton in das Lebensmittel. In einer weiteren Ausführungsform kann der Karton mit der beschichteten Folie laminiert oder kaschiert werden. Aus dem beschichteten Karton wird dann eine Verpackung hergestellt, welche das Lebensmittel enthält. Diese Variante ist vorteilhaft für Verpackungen in denen das Lebensmittel andernfalls in einem direkten Kontakt mit dem Karton stehen würde.

### Folie:

Bei den im Rahmen der vorliegenden Erfindung eingesetzten Folien auf Basis von Polyolefinen handelt es sich um Folien auf Basis von biaxial orientierte Polypropylenfolien (boPP). Diese Folien können ein- oder mehrschichtig aufgebaut sein und weisen eine Beschichtung gemäß Anspruch 1 umfassend (i) Acrylatpolymer, und/oder (ii) halogenhaltige Vinyl- und/oder Vinylidenpolymere, und/oder (iii) Polymere basierend auf Vinyl-Alkohol (VOH) auf.

Die einschichtige Folie bzw. die Basisschicht der mehrschichtig aufgebauten Folie enthält ein Propylenpolymer sowie gegebenenfalls weitere übliche Additive in jeweils wirksamen Mengen. Im Allgemeinen enthält die Basisschicht mindestens 70 bis <100 Gew.-%, vorzugsweise 75 bis 98 Gew.-%, insbesondere 85 bis 95 Gew.-%, des Polyolefins, jeweils bezogen auf das Gewicht der Schicht.

Als Polyolefine der Basisschicht bzw. als Material für einschichtige Folien sind Propylenpolymere essentiell. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

In einer opaken Ausführungsform enthält die Basisschicht der Folie, bzw. die einschichtige Folie vakuoleninitierende Füllstoffe in einer Menge von maximal 30 Gew.-%, vorzugsweise 5 bis 25 Gew.-%, bezogen auf das Gewicht der opaken Basisschicht.

Vakuoleniniziierende Füllstoffe sind feste Teilchen, die mit der Polymermatrix unverträglich sind und beim Verstrecken der Folien zur Bildung von vakuolenartigen Hohlräumen führen. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1,5 bis 5 µm. Der chemische Charakter der Teilchen spielt eine untergeordnete Rolle.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren opaken Ausführungsform kann die Basisschicht bzw. die einschichtige Folien zusätzlich oder alternativ zu den vakuoleninitierenden Füllstoffen Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Schicht.

Pigmente sind im Sinne der vorliegenden Erfindung unverträgliche Teilchen, die im Wesentlichen nicht zur Vakuolenbildung beim Verstrecken der Folie führen. Die z.B. färbende Wirkung der Pigmente wird durch die Teilchen selbst verursacht. Pigmente sind sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der Folie wird wesentlich von der Dichte der Basisschicht bestimmt. Im Allgemeinen liegt die Dichte der Basisschicht in einem Bereich von 0,45 - 0,95g/cm³. Die Vakuolen reduzieren die Dichte der Basisschicht, Pigmente erhöhen die Dichte der Basisschicht, gegenüber der Dichte von Polypropylen (∼0,9g/cm³).

Die Dicke der Folie liegt im allgemeinen in einem Bereich von 20 bis 100µm, vorzugsweise 25 bis 60 µm, insbesondere 30 bis 50µm. Insofern die Folien einen mehrschichtigen Aufbau haben, beträgt die Dicke der Basisschicht zwischen 10 und 60µm, vorzugsweise zwischen 10 und 40µm. Die vorstehend genannten Dicken verstehen sich ohne die Beschichtung umfassend (i) Acrylatpolymer, und/oder (ii) halogenhaltige Vinyl-und/oderVinylidenpolymere, und/oder (iii) Polymere basierend auf Vinyl-Alkohol (VOH)

Insofern die Folie mehrschichtig aufgebaut ist, umfasst die Folie neben der genannten Basisschicht noch weitere Schichten, die mindestens auf einer Seite oder auf beiden gegenüberliegenden Seiten der Basisschicht aufgebracht sind. Somit resultiert bei zwei Deckschichten ein dreischichtiger Aufbau der Folie.

Die Dicke der Deckschicht beträgt im Allgemeinen 0,5 - 3 µm. In einer weiteren Ausführungsform der Erfindung befinden sich zwischen der Deckschicht und der Basisschicht noch ein- oder beidseitig Zwischenschichten deren Dicke im Bereich von 1 bis 8 µm liegt. Bei einer Kombination aus Zwischenschicht und Deckschicht haben diese zusammen vorzugsweise eine Gesamtdicke von 2 bis 8 µm.

Die Deckschichten können als siegelfähige Schicht ausgestaltet werden, wobei hierunter sowohl heißsiegelfähige als auch kaltsiegelfähige Schichten verstanden werden. Kaltsiegelbeschichtungen können direkt auf die Oberfläche einer einschichtigen Folie aufgebracht werden. Im Allgemeinen ist es jedoch bevorzugt die Basisschicht zunächst mit einer coextrudierten polymeren Schicht abzudecken und die Kaltsiegelbeschichtung auf diese polymere Deckschicht aufzubringen. Geeignete Materialien für die heißsiegelfähige Deckschicht sind die nachstehend genannten Homo-, Copolymeren und Terpolymeren.

Zur Verbesserung der Haftung wird die Oberfläche der Folie vor der Beschichtung in an sich bekannter Weise mittels Corona, Flamme oder Plasma einem Verfahren zur Erhöhung der Oberflächenspannung unterworfen. Typischerweise liegt dann die Oberflächenspannung der so behandelten Schicht in einem Bereich von 35 bis 45 mN/m. Diese Oberflächenbehandlung kann auf einer oder auf beiden Oberflächen der Folie erfolgen.

Die vorstehend beschriebenen Deck- und Zwischenschicht enthalten im allgemeinen mindestens 80 Gew.-%, vorzugsweise 90 bis <100 Gew.%, olefinische Polymere oder Mischungen daraus, sowie gegebenenfalls übliche additive in jeweils wirksamen Mengen. Geeignete Polyolefine sind beispielsweise Polyethylene, Propylencopolymere und/oder Propylenterpolymere, sowie die bereits im Zusammenhang mit der Basisschicht beschriebenen Propylenhomopolymeren.

Geeignete Propylenco- oder Terpolymere sind im Allgemeinen aus mindestens 50 Gew.-% Propylen- und Ethylen- und/oder Butyleneinheiten als Comonomer aufgebaut. Bevorzugte Mischpolymerisate sind statistische Ethylen-PropylenCopolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren. Diese Co-und Terpolymeren haben im Allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im Allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

Die Folie enthält im Allgemeinen in den jeweiligen Schichten übliche Stabilisatoren und Neutralisationsmittel in üblichen Mengen, sowie gegenfalls Antiblockmittel in der oder den Deckschichten. Als Gleitmittel und Antistatika werden den Schichten nur solche Additive, bzw. Additive nur in solchen Mengen zugesetzt, die die Haftung der Beschichtungen nicht beeinträchtigen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oderAlkali-/Erdalkalicarbonate. Phenolische Stabilisatoren werden in einer Menge von 0,1 bis 0,6 Gew.%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumcarbonat und/oder Dihydrotalcit (DHT) einer mittleren Teilchengröße von höchstens 0,7 µm, einer absoluten Teilchengröße von kleiner 10 µm und einer spezifischen Oberfläche von mindestens 40 m²/g. Im Allgemeinen werden Neutralisationsmittel in einer Menge von 50 bis 1000 ppm, bezogen auf die Schicht eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PM-MA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Herstellung der in der erfindungsgemäßen Verpackung vorhandenen Folie erfolgt mittels an sich bekannter Verfahren und Methoden.

Die Folie sollte im Allgemeinen im Hinblick auf die nachfolgende Beschichtung in keiner Schicht migrierende Additive, z.B. Gleitmittel oder Antistatika aufweisen, da diese zu Problemen bei der Haftung der Beschichtung führen können.

### Beschichtung:

Die im Rahmen der vorliegenden Erfindung eingesetzten Folien auf Basis von biaxial orientierten Polypropylenfolien (boPP), weisen eine Beschichtung gemäß Anspruch 1 umfassend (i) Acrylatpolymer, und/oder (ii) halogenhaltige Vinyl- und/oder Vinylidenpolymere, und/oder (iii) Polymere basierend auf Vinyl-Alkohol (VOH), auf. Die Beschichtung kann auf einer oder beiden Seiten der Folie vorliegen.

Die Beschichtung kann mehrschichtig aufgetragen sein, wobei auch Kombinationen von verschiedenen Materialien/Polymeren, z.B. Acrylatpolymer und Polyvinyliden-Dichlorid (PVDC), zum Einsatz kommen. Mehrschichtig bedeutet im vorliegenden Fall, das pro Schicht eines der genannten Materialien ausgewählt aus der Gruppe Acrylatpolymer, Polyvinyliden-Dichlorid (PVDC) oder Polymere basierend auf Vinyl-Alkohol (VOH) als Hauptkomponente vorliegt.

Im Allgemeinen wird die Folie zunächst auf der zu beschichtenden Seite behandelt, um die Oberflächenspannung zu erhöhen. Nach der Erhöhung der Oberflächenspannung wird auf die zu beschichtende Oberfläche ein Haftvermittler aus Polyethylenimin aufgebracht. Solche Haftvermittler sind an sich bekannt. Die Haftvermittler können auch mehrschichtig aufgetragen sein (sekundäre Haftvermittlerschicht), wobei auch Kombinationen von verschiedenen Haftvermittlern möglich sind. Mehrschichtig bedeutet im vorliegenden Fall, dass pro Schicht einer der oben genannten Haftvermittler als Hauptkomponente vorliegt. Werden als Haftvermittler wässrige Polyethyleniminlösung aufgebracht, enthalten diese üblicherweise 1 Gew.-% Polyethylenimin. Polyethyleniminlösung begünstigt die nachfolgende Beschichtung, wie beispielsweise in EP-A-0255870 beschrieben.

Bei den erfindungsgemäßen Beschichtungsmaterialien handelt es sich (i) um Acrylatpolymer, und/oder (ii) halogenhaltige Vinyl- und/oder Vinylidenpolymere, und/oder (iii) Polymere basierend auf Vinyl-Alkohol (VOH). Diese sind jeweils als konkrete Schicht angeordnet. Konkrete Schichten sind in sich homogene Schichten aus einem definierten Beschichtungsmaterial. Hierbei sind für das jeweilige Beschichtungsmaterial Mischungen der vorstehend genannten Materialien/Polymeren nicht gewünscht, in Form von Copolymeren jedoch nicht ausgeschlossen.

Neben den vorstehenden genannten Materialien enthalten die Beschichtungen gegebenenfalls noch weitere Komponenten z.B. als Gleitmittel, vorzugsweise nicht migrierende Gleitmittel wie z.B. Wachse oder/und Antiblockmittel.

Die erfindungsgemäßen Beschichtungsmaterialien werden als Dispersion, insbesondere wässrige Dispersion, aufgetragen deren Feststoffgehalt zwischen 10 bis 70Gew.-%, bevorzugt 20-60 Gew.-% beträgt.

Bei den erfindungsgemäß eingesetzten Acrylatpolymeren werden Acrylat-Homopolymere und/oder Acrylat-Copolymere auf Basis von Methylmethacrylat und/oder Ethylacrylat eingesetzt. Ein Acrylatcopolymer kann aus 2 oder mehr unterschiedlichen Monomeren aufgebaut sein. Des Weiteren sind Mischungen aus den jeweiligen Acrylat-Homo- und/oder Acrylat-Copolymeren möglich. Derartige Materialien sind beispielsweise unter der Bezeichnung NeoCryl BT-36 und NeoCryl FL-711 von der Firma DSM NeoResins (Niederlande) oder unter anderer Bezeichnung von der Fa. BASF im Markt erhältlich. Bevorzugte wässrige Beschichtungs-Dispersionen auf Basis von Acrylatpolymer umfassen mindestens80 Gew% Acrylat- Dispersion, mindestens 10 Gew% Wachs-Dispersion, mindestens 12 Gew% Dispersion eines kolloidalen Silica und mindestens 7 Gew% Antiblockmittel-Dispersion. Die Differenzmengen zu 100 Gew% bestehen aus Wasser. Die Menge an Acrylat-Beschichtung pro Seite der Folie nach Trocknung beträgt zwischen 0,5 und 1,5 g/m².

Bei den erfindungsgemäß eingesetzten halogenhaltigen Vinyl- und/oder Vinylidenpolymeren handelt es sich vorzugsweise um Polymere auf Basis von Vinylchlorid- und/oder Vinylidenchlorid-Homopolymeren und/oder Copolymeren, wobei die Comonomere aus der Gruppe der Vinylacetate, Vinylhalogenide oder Acrylate stammt. Die einzelnen Monomere können in unterschiedlicher Gewichtung im Copolymer vorliegen. Derartige Materialien sind beispielsweise unter der Bezeichnung Diofan^{®} A 297, Diofan^{®} A 114 und Diofan^{®} B 200 von der Firma SolVin.S.A. (Belgien) im Markt erhältlich. Bevorzugte wässrige Beschichtungsdispersionen auf Basis von halogenhaltigen Vinyl- und/oder Vinylidenpolymeren, insbesondere Polyvinyliden-Dichlorid (PVDC), umfassen mindestens 95% Gew.-% PVDC-Acrylat Copolymer Dispersion, mindestens 10 Gew% Wachs-Dispersion, mindestens 7 Gew% Antiblock-Dispersion. Die Differenzmengen zu 100 Gew% bestehen aus Wasser. Die Menge an Beschichtung pro Seite der Folie nach Trocknung beträgt zwischen 2,5 und 4 g/m², wobei die vorstehende Menge die sekundäre Primerschicht auf Basis von Vinylacetat/Acrylat mitumfasst.

Bei den erfindungsgemäß eingesetzten Polymeren auf Basis von Vinyl-Alkohol (VOH) handelt es sich um an sich bekannte Vinylpolymere. Bevorzugte wässrige Beschichtungsmaterialien auf Basis von Vinyl-Alkohol (VOH) sind Ethylenvinyl Alkohol (EVOH) und umfassen 5-15 Gew% eines Gemisches aus Ethylenvinyl Alkohol und Polyvinyl-Alkohol, vorzugsweise im Verhältnis 0,8-1,2 zu 1,2-0,8, insbesondere 1:1 Gewichtsverhältnisse. Die Menge an Beschichtung pro Seite der Folie nach Trocknung beträgt zwischen 0,5 und 1,0 g/m² für Beschichtungsmaterialien auf Basis von Vinyl-Alkohol (VOH).

Das Auftragen der erfindungsgemäßen Beschichtungsmaterialien erfolgt bevorzugt nach der Erhöhung der Oberflächenspannung, z.B. durch Corona-Behandlung, wodurch die Haftung verbessert wird. Wie bereits erwähnt wird auf der zu beschichtenden Seite nach der Oberflächenbehandlung ein Haftvermittler aus Polyethylenimin aufgebracht und getrocknet. Insofern ein sekundärer Haftvermittler (zweite Haftvermittlerschicht) von Vorteil ist wird dieser ebenfalls aufgebracht. Die Auftragung der Haftvermittler und der Beschichtungsmaterialien erfolgt nach an sich bekannten Verfahren, wie beispielsweise Roller-Coating (Walzenauftragssysteme, z.B. mit Gravurwalzen), Curtain-Coating, Spray Coating. Die aufgetragenen Beschichtung wird anschließend mit üblichen Trocknungsverfahren getrocknet (z.B. Heißluft).

Die erfindungsgemäße Verwendung der beschichteten Folien erfolgt derart, daß die beschichtet Seite der Folie dem belasteten Karton zugewandt ist. Überraschenderweise stellt die Beschichtung in direktem Kontakt mit dem belasteten Karton eine effektive Migrationsbarriere dar. Daher kann auf die alternative Metallisierung der Folie oder des Kartons verzichtet werden. De erfindungsgemäße Verpackung ist daher vorzugsweise frei von einer zusätzlichen Metallschicht. Dies schließt jedoch metallische Drucke oder ähnliche metallische Dekorationen nicht aus. Damit können kosteneffiziente Verpackungen aus belasteten Kartonagen hergestellt werden, bei denen keine nennenswerte Mengen oder gar keine Menge an Mineralölen in das Lebensmittel migrieren.

### Definition Recyclingcarton:

Bei dem im Rahmen der vorliegenden Erfindung eingesetzten Karton auf Basis von Recyclingkarton handelt es sich um Kartonagen die nennenswerte Mengen von Mineralölen aufweisen und somit gemäß der VERORDNUNG (EG) Nr. 1935/2004 DER KOMMISSION vom 27. Oktober 2004 unterliegen (nach- oder vorstehend auch belastete Kartonagen).

Derartige Kartonagen auf Basis von Recyclingkarton enthalten typischer Weise mindestens 300-1000 mg/kg Mineralöl. Diese Mineralöle werden als "mineral oil saturated hydrocarbons" (MOSH) oder als "mineral oil aromatic hydrocarbons" (MOAH) bezeichnet. Die MOSH und MOAH Mineralöle werden oftmals noch hinsichtlich ihrer Kohlenstoffketten spezifiziert, z.B. als MOSH 14-24, MOSH 24-35, MOAH 14-24 und MOAH 24-35, wobei die Zahlenwerte die Anzahl an Kohlenstoffatomen widergibt. Die genaue Zusammensetzung der MOSH und MOAH Mineralöle hängt von der Art des Recyclingkartons ab, d.h. die Fraktionen an MOSH 14-24, MOSH 24-35, MOAH 14-24 und MOAH 24-35 sind unterschiedlich.

Die in der erfindungsgemäßen Lebensmittelverpackung vorhandene Folie weist gute Barriereeigenschaften gegenüber den MOSH und MOAH Mineralölen, insbesondere gegenüber MOSH 14-24, MOSH 24-35, MOAH 14-24 und MOAH 24-35, auf.

Vorzugsweise weist die in der erfindungsgemäßen Lebensmittelverpackung vorhandene Folie eine gute Barriere gegenüber MOSH und MOAH Mineralölen auf, so dass die gemäß der VERORDNUNG (EG) Nr. 1935/2004 DER KOMMISSION vom 27. Oktober 2004 mit Lebensmitteln in Kontakt kommen darf. Als Lebensmittel wird ein Lebensmittelsimulanz, d.h. ein Testmedium, das trockene Lebensmittel nachahmt, gemäß der VERORDNUNG (EU) Nr. 10/2011 DER KOMMISSION vom 14. Januar 2011 verstanden. Diese ahmt durch sein Verhalten die Migration aus Lebensmittelkontaktmaterialien nach.

Vorzugsweise migrieren bei der erfindungsgemäßen Verwendung der beschichteten Folie in der erfindungsgemäßen Lebensmittelverpackung lediglich maximal 1%, insbesondere maximal 0,5%, der im Recyclingkarton vorhandenen MOSH 14-24 Fraktion in ein Lebensmittelsimulanz gemäß der VERORDNUNG (EU) Nr. 10/2011 DER KOMMISSION vom 14. Januar 2011 (Tenax^{®} erhältlich von der Firma Buchem B.V, Poly(2,6-diphenyl-p-phenylenoxid), Partikelgröße 60-80 Mesh, Porengröße 200 nm), wenn der Recyclingkarton mindestens 300-1000 mg/kg Mineralöl (Summe MOSH 14-24, MOSH 24-35, MOAH 14-24 und MOAH 24-35) aufweist und der Anteil der Fraktion MOSH 14-24 im Mineralöl min. 30 Gew.-% beträgt. Die vorstehende Migrationsmessung erfolgt bei 40°C und für die Dauer von 10 Tagen.

Vorzugsweise migrieren bei der erfindungsgemäßen Verwendung der beschichteten Folie in der erfindungsgemäßen Lebensmittelverpackung lediglich maximal 1,6%, insbesondere maximal 1,4%, der im Recyclingkarton vorhandenen MOSH 24-35 Fraktion in ein Lebensmittelsimulanz gemäß der VERORDNUNG (EU) Nr. 10/2011 DER KOMMISSION vom 14. Januar 2011 (Tenax^{®} erhältlich von der Firma Buchem B.V, Poly(2,6-diphenyl-p-phenylenoxid), Partikelgröße 60-80 Mesh, Porengröße 200 nm), wenn der Recyclingkarton mindestens 300-1000 mg/kg Mineralöl (Summe MOSH 14-24, MOSH 24-35, MOAH 14-24 und MOAH 24-35) aufweist und der Anteil der Fraktion MOSH 24-35 im Mineralöl min. 10 Gew.-% beträgt. Die vorstehende Migrationsmessung erfolgt bei 40°C und für die Dauer von 10 Tagen.

Vorzugsweise migrieren bei der erfindungsgemäßen Verwendung der beschichteten Folie in der erfindungsgemäßen Lebensmittelverpackung lediglich maximal 0,5%, insbesondere maximal 0,3%, der im Recyclingkarton vorhandenen MOAH 14-24 Fraktion in ein Lebensmittelsimulanz gemäß der VERORDNUNG (EU) Nr. 10/2011 DER KOMMISSION vom 14. Januar 2011 (Tenax^{®} erhältlich von der Firma Buchem B.V, Poly(2,6-diphenyl-p-phenylenoxid), Partikelgröße 60-80 Mesh, Porengröße 200 nm), wenn der Recyclingkarton mindestens 300-1000 mg/kg Mineralöl (Summe MOSH 14-24, MOSH 24-35, MOAH 14-24 und MOAH 24-35) aufweist und der Anteil der Fraktion MOAH 14-24 im Mineralöl min. 10 Gew.-% beträgt. Die vorstehende Migrationsmessung erfolgt bei 40°C und für die Dauer von 10 Tagen.

Vorzugsweise migrieren bei der erfindungsgemäßen Verwendung der beschichteten Folie in der erfindungsgemäßen Lebensmittelverpackung lediglich maximal 3,5%, insbesondere maximal 2,0%, besonders bevorzugt maximal 1,0%, der im Recyclingkarton vorhandenen MOAH 24-35 Fraktion in ein Lebensmittelsimulanz gemäß der VERORDNUNG (EU) Nr. 10/2011 DER KOMMISSION vom 14. Januar 2011 (Tenax^{®} erhältlich von der Firma Buchem B.V, Poly(2,6-diphenyl-p-phenylenoxid), Partikelgröße 60-80 Mesh, Porengröße 200 nm), wenn der Recyclingkarton mindestens 300-1000 mg/kg Mineralöl (Summe MOSH 14-24, MOSH 24-35, MOAH 14-24 und MOAH 24-35) aufweist und der Anteil der Fraktion MOAH 24-35 im Mineralöl min. 1 Gew.-% beträgt. Die vorstehende Migrationsmessung erfolgt bei 40°C und für die Dauer von 10 Tagen.

Weiterer Gegenstand der vorliegenden Erfindung ist die Verwendung der eingangs beschriebenen Folie zur Herstellung von Lebensmittelverpackungen umfassend Recyclingkarton.

Die Herstellung der in der erfindungsgemäßen Lebensmittelverpackung enthaltenen Folie erfolgt mittels an sich bekannter Extrusions- bzw. Coextrusionsverfahren, wobei insbesondere das Stenterverfahren bevorzugt ist.

Hierzu werden die einzelnen Schichten der Folie entsprechenden Schmelzen durch eine Flachdüse co/extrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gegebenfalls gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 45 mN/m, vorzugsweise 37 bis 45 mN/m, insbesondere 38 bis 41mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird dann einseitig oder beidseitig nach den an sich bekannten Verfahren auf einer oder beiden äußeren Oberfläche mit den vorstehend beschriebenen Beschichtungen versehen.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Bestimmung des Ethylengehalts

Der Ethylengehalt der Polyolefin-Copolymeren wird mittels 13C-NMR Spektroskopie bestimmt. Die Messungen wurden mit einem Kernresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyl-tetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN 53 479, Verfahren A, bestimmt.

### Oberflächenspannung

Die Oberflächenspannung wurde mittels Tintenmethode nach DIN 53 364 bestimmt.

### Reibung

Die Reibung wird nach DIN 53375 gemessen.

### Migrationsmessung

Die Messung der Migration der MOSH und MOAH Mineralöle erfolgte gemäß der Methode, die vom BfR (Bundesinstitut für Risikobewertung) in Zusammenarbeit mit dem Kantonalen Labor Zürich entwickelt wurde. Sie basiert auf einer gaschromatographischen Analyse der Mineralöle nach manueller säulenchromatographischer Vortrennung ("Bestimmung von Kohlenwasserstoffen aus Mineralöl (MOSH und MOAH) oder Kunststoffen (POAH, PAO) in Verpackungsmaterialien und trockenen Lebensmitteln mittels Festphasenextraktion und GC-FID". Die Methode wurde auf der Fachtagung "Mineralöle in Lebensmittelverpackungen -Entwicklungen und Lösungsansätze", die am 22. und 23. September 2011 in Berlin stattfand, vorgestellt. Als Lebensmittelsimulanz wird eine Prüfsubstanz Tenax^{®} erhältlich von der Firma Buchem B.V, Poly(2,6-diphenyl-p-phenylenoxid), Partikelgröße 60-80 Mesh, Porengröße 200 nm), eingesetzt.

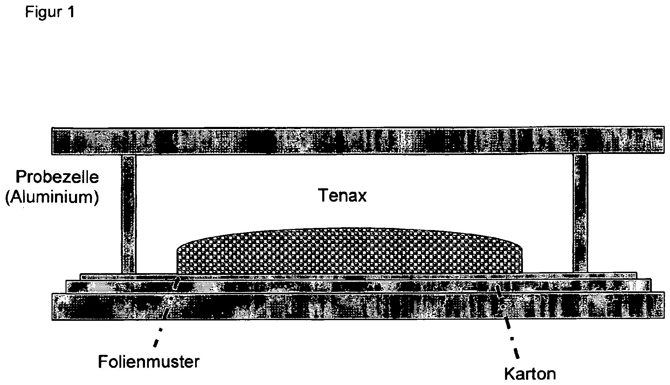

Versuchsaufbau (Figur 1): Ein mit einer definierten Menge Mineralöl getränkter Karton wurde mit der zu messenden Probe abgedeckt, Tenax^{®} darauf verteilt und alles in einem geschlossenen System aus Aluminium gelagert (Temperatur 40°C, Zeit 10 Tage) Nach der Lagerzeit wurde das Tenax^{®} mit Hexan extrahiert und geeignete interne Standards zugegeben (Festphasenextraktion), anschließend erfolgte eine flüssigkeitschromatische Auftrennung (LC) mit einer stationären Phase aus Silicagel dotiert mit 0,3% Silbernitrat und einer mobilen Phase zu Beginn Hexan danach eine Mischung aus Hexan, Dichlormethan und Toluol. Das Eluat wurde in einem dritten Schritt gaschromatisch aufgetrennt, die Detektion erfolgte abweichend von der oben zitierten BfR-Methode mittels GC-MS/FID.

Die Erfindung wird nunmehr durch die nachfolgenden Beispiele erläutert.

### Herstellung der unbeschichteten Folien:

Die Herstellung der Folien Typ 1 bis 3 erfolgt nach dem bekannten Coextrusionsverfahren. Hierbei wurde durch Coextrusion und anschließende stufenweise Orientierung in Längs- und Querrichtung eine transparente dreischichtige Folie mit beidseitigen Deckschichten und mit einer Gesamtdicke von 25 µm hergestellt. Die Deckschichten hatten eine Dicke von jeweils 0,9 µm.

### Folie Typ 1:

| | |
|---|---|
| Basisschicht: Ca. 100 Gew.-% | isotaktisches Propylenhomopolymer mit einem Schmelzpunkt von 163 °C und einem Schmelzflußindex von 3,2 g/10min. |
| Deckschichten: ca. 100 Gew.-% | statistische Ethylen-Propylen-Butylen-Terpolymer mit einem Ethylengehalt von 3 Gew.-% und einem Butylengehalt von 6 Gew.-% (Rest Propylen) |
| 0,1 Gew.-% | SiO₂ als Antiblockmittel mit einer mittleren Teilchengröße d₅₀ von 5 µm |

Die Herstellungsbedingungen in den einzelnen Verfahrensschritten waren:

| | | |
|---|---|---|
| Extrusion: | Temperaturen Basisschicht: | 260 °C |
| | Deckschichten: | 240°C |
| | Temperatur der Abzugswalze: | 30°C |
| Längsstreckung: | Temperatur: | 120°C |
| | Längsstreckverhältnis: | 5,5 |
| Querstreckung: | Temperatur: | 160°C |
| | Querstreckverhältnis: | 9 |
| Fixierung: | Temperatur: | 130°C |
| | Konvergenz: | 20% |

Alle Schichten der Folie enthielten Neutralisationsmittel und Stabilisatoren in den üblichen Mengen. Beide Oberflächen wurden mittels Corona zur Erhöhung der Oberflächenspannung vorbehandelt.

### Folie Typ 2

Es wurde eine Folie nach Folie Typ 1 hergestellt. Im Unterschied zu FolieTyp 1 enthielten beide Deckschichten ein statistisches Ethylen-Propylen-Copolymer mit einem Ethylengehalt von ca. 4,5 Gew.-% und einem Erweichungspunkt von ca. 130 °C. Folie.

### Folie Typ 3 (Vergleichsbeispiel)

Es wurde eine Folie nach Folie Typ 1 hergestellt. Im Unterschied zu FolieTyp 1 enthielt die Basisschicht zusätzlich Erucasäureamid als Gleitmittel in einer Menge von 0,05 Gew% und ein Bis-ethoxyliertes Amin in einer Menge von 0,09 Gew%.

### Beschichtung:

Auf die vorstehend beschriebenen unbeschichteten Folien wird zunächst ein Polyethylenimin-Haftvermittler aufgebracht und getrocknet. Anschließend werden verschiedene Beschichtungen aus Acrylatpolymer, PVDC oder Vinylalkoholpolymer mittels Gravurwalzen aufgebracht.

### Beispiel 1:

Auf die Folie Typ 1 wird eine 1 Gew % Polyethylenimin-Dispersion beidseitig aufgebracht und getrocknet. Darauf wird ebenfalls beidseitig eine Acrylatpolymer-Dispersion der Fa. NeoResins mit dem Handelsnamen BT36, mit einem Feststoffgehalt von 20 Gew% aufgebracht und getrocknet. Neben der Arcrylat-Polymer Dispersion wurden Additive wie Carnauba-Wachs und Antiblockmittel verwendet. Die Menge wurde so gewählt, dass ausreichende Antiblock-Wirkung zur Abwicklung der Folienrolle, sowie ein Reibwert von etwa 0,3 erreicht werden.
Die Dicke der Acrylatpolymerschicht beträgt 0,8 µm, was einem Coatinggewicht von 0,8g/m² entspricht.

### Beispiel 2:

Es wird eine Folie wie in Beispiel 1 beschrieben hergestellt. Im Gegensatz zu Beispiel 1 wird aber nur Seite 1 der Folie Typ 1 mit der Acrylatpolymer-Dispersion beschichtet. Die Seite 2 wird auf der Haftvermittler-Schicht mit einer Polyvinylchlorid-Dispersion der Fa. Solvin mit dem Handelsnamen Diofan A114 mit einem Feststoffgehalt von 50 Gew% beschichtet. Analog Beispiel 1 wird auch hier auf beiden Seiten Additive (Carnauba-Wachs und Antiblock) zugesetzt. Die Dicke der Polyvinylchlorid-Schicht beträgt 2,0 µm was einem Coatinggewicht von 3,5 g/m² entspricht.

### Beispiel 3:

Auf die Folie Typ 2 wird auf Seite 1 eine 1 Gew % Polyethylenimin-Dispersion aufgebracht und getrocknet. Darauf wird eine Vinylalkohol-Dispersion der Fa. Kurary mit den Handlesnamen Mowiol 3-98 und Exceval AQ-4005 (im Verhältnis 1:1) mit einem Feststoffgehalt von insgesamt 10 Gew% aufgebracht und getrocknet.
Die Dicke der Beschichtungsschicht beträgt 0,8 µm, was einem Coatinggewicht von 0,8 g/m² entspricht. Zusätzlich werden Additive wie Carnauba-Wachs und Antiblockmittel verwendet. Die Menge wird so gewählt, dass ausreichende Antiblock-Wirkung zur Abwicklung der Folienrolle, sowie ein Reibwert von etwa 0,3 erreicht werden

### Beispiel 4:

Es wird eine Folie nach Beispiel 3 hegestellt. Im Gegensatz zu Beispiel 3 wird zusätzlich auf Seite 2 eine 1 Gew % Polyethylenimin-Dispersion aufgebracht und getrocknet. Auf diese Haftvermittlerschicht wird eine Acrylatpolymer-Dispersion der Fa. NeoResins mit dem Handelsnamen BT36, mit einem Feststoffgehalt von 20 Gew%aufgebracht und getrocknet. Neben der Arcrylat-Polymer Dispersion werden Additive wie Carnauba-Wachs und Antiblockmittel verwendet. Die Menge wird so gewählt, dass ausreichende Antiblock-Wirkung zur Abwicklung der Folienrolle, sowie ein Reibwert von etwa 0,3 erreicht werden. Die Dicke der Acrylatpolymer-Schicht beträgt 0,8 µm, was einem Coatinggewicht von 0,8g/m² entspricht.

### Vergleichsbeispiel:

Folie Typ 3 wurde ohne Beschichtung verwendet.

**Die vorstehende Beschichtung wurde erfindungsgemäß variiert und in Tabelle 1 zusammengefasst:**

| | | | |
|---|---|---|---|
| | Beschichtung | Beschichtung | Mineralölbarriere |
| | Vorderseite=Seite 1 | Rückseite=Seite 2 | +++ sehr gut |
| | (dem Karton zugewandt) | | ++ gut |
| | | | + befriedigend |
| | | | - keine Barriere |
| Beispiel 1 (Folie Typ 1: | Acrylatpolymer | Acrylatpolymer | MOSH 14-24 +++ |
| Terpo-Homo-Terpo) | 0,8 µm | 0,8 µm Coatingschichtdicke | MOSH 24-35 ++ |
| | Coatingschichtdicke | | MOAH 14-24 +++ |
| | | | MOAH 24-35 +++ |
| | Beschichtung | Beschichtung | Mineralölbarriere |
| | Vorderseite=Seite 1 | Rückseite=Seite 2 | +++ sehr gut |
| | (dem Karton zugewandt) | | ++ gut |
| | | | + befriedigend |
| | | | - keine Barriere |
| Beispiel 2 (Folie Typ 1: | Acrylatpolymer | PVDC | MOSH 14-24 ++ |
| Terpo-Homo-Terpo) | 0,8 µm | 2,0µm Coatingschichtdicke | MOSH 24-35 ++ |
| | Coatingschichtdicke | | MOAH 14-24 +++ |
| | | | MOAH 24-35 +++ |
| Beispiel 3 (Folie Typ 2: | Vinylalkoholpolymer (EVOH) | keine | MOSH 14-24 ++ |
| Copo-Homo-Copo) | | | MOSH 24-35 + |
| | 0,8 µm | | MOAH 14-24 +++ |
| | Coatingschichtdicke | | MOAH 24-35 +/- |
| Beispiel 4 (Folie Typ 2: | Vinylalkoholpolymer (EVOH) | Acrylatpolymer | MOSH 14-24 +++ |
| Copo-Homo-Copo) | | 0,8 µm Coatingschichtdicke | MOSH 24-35 ++ |
| | 0,8 µm | | MOAH 14-24 +++ |
| | Coatingschichtdicke | | MOAH 24-35 ++ |
| | | | |
| Vergleichsbsp 1 (Folie Typ 3) | keine | keine | MOSH 14-24 - |
| | | | MOSH 24-35 - |
| | | | MOAH 14-24 - |
| | | | MOAH 24-35 - |

## Patentansprüche

1. Lebensmittelverpackung umfassend:
a) ein Lebensmittel,
b) eine Folie auf Basis von Polyolefinen, welche das Lebensmittel einschließt,
c) ein Karton auf Basis eines Recyclingkartons, welcher die Folie auf Basis von Polyolefinen, enthaltend das Lebensmittel einschließt,
**dadurch gekennzeichnet, dass** die Folie auf Basis von Polyolefinen, mindestens eine Beschichtung umfassend (i) Acrylatpolymer, wobei es sich um Acrylat-Homopolymere und/oder Acrylat-Copolymere auf Basis von Methylmethacrylat und/oder Ethylacrylat handelt, wobei die Menge an Acrylat-Beschichtung pro Seite der Folie nach Trocknung zwischen 0,1 und 1,5 g/m² beträgt und die Dicke dieser Acrylat-Schicht inklusive der Schicht des Haftvermittlers <2,0 µm beträgt, und/oder (ii) halogenhaltige Vinyl- und/oder Vinylidenpolymere, wobei die Menge an Beschichtung pro Seite der Folie nach Trocknung zwischen 2,5 und 4 g/m² für Beschichtungsmaterialien auf Basis von halogenhaltigen Vinyl- und/oder Vinylidenpolymeren beträgt, wobei die vorstehende Menge die sekundäre Primerschicht auf Basis von Vinylacetat/Acrylat mitumfasst, und die Schichtdicke 1,5 bis 2,0µm beträgt, und/oder (iii) Polymere basierend auf Vinyl-Alkohol (VOH) aufweist, wobei die Menge an Beschichtung pro Seite der Folie nach Trocknung zwischen 0,5 und 1,0 g/m² für Beschichtungsmaterialien aus Polymeren basierend auf Vinyl-Alkohol (VOH), beträgt und die Schichtdicke 1 bis 1.5µm beträgt, und die Beschichtung zumindest auf der Seite der Folie vorliegt, die dem Karton auf Basis eines Recyclingkartons zugewandt ist, wobei die Folie auf Basis von Polyolefin eine biaxial orientierte Polypropylenfolie (boPP) ist und die Folie ein- oder beidseitig einen Haftvermittler aus Polyethylenimin aufweist, auf welchen die Beschichtung/en aufgebracht ist/sind.

2. Lebensmittelverpackung gemäß Anspruch 1, **dadurch gekennzeichnet, dass** die Folie und/oder der Karton keine Metallisierung aufweist, welche die Migration von Mineralölen in das verpackte Lebensmittel verhindert.

3. Lebensmittelverpackung gemäß Anspruch 1, **dadurch gekennzeichnet, dass** die Polypropylenfolie mehrschichtig aufgebaut ist und eine Basisschicht umfasst, die 75 bis 98 Gew.-%, des Polyolefins, jeweils bezogen auf das Gewicht der Schicht enthält.

4. Lebensmittelverpackung gemäß Anspruch 1, **dadurch gekennzeichnet, dass** die Polypropylenfolie einschichtig ist und 90 bis 100 Gew.-%, Propylenpolymere enthält deren Schmelzpunkt 120°C oder höher beträgt und einen Schmelzflußindex von 1 bis 10 g/10 min, bei 230°C und einer Kraft von 21,6 N (DIN 53735) aufweist.

5. Lebensmittelverpackung gemäß Anspruch 1 bis 4, **dadurch gekennzeichnet, dass** das Polyolefin der Folie Pigmente in einer Menge von 0,5 bis 10 Gew.-%, enthält.

6. Lebensmittelverpackung gemäß Anspruch 1 bis 5, **dadurch gekennzeichnet, dass** die Beschichtung auf beiden Seiten der Folie vorliegt und jeweils eine Gesamtdicke zwischen 0,4 - 5µm, aufweist.

7. Lebensmittelverpackung gemäß Anspruchl bis 6, **dadurch gekennzeichnet, dass** die Beschichtung mehrschichtig aufgebaut ist und bei einer Beschichtung aus halogenhaltigen Vinyl- und/oder Vinylidenpolymeren, zunächst eine sekundäre Primerschicht auf Basis von Vinylacetat/Acrylat aufweist und die Schichtdicke der sekundären Primerschicht 50-100% der Schichtdicke der Beschichtung aus halogenhaltigem Vinyl- und/oder Vinylidenpolymeren, aufweist.

8. Lebensmittelverpackung gemäß Anspruch 1 bis 7, **dadurch gekennzeichnet, dass** das Beschichtungsmaterial aus einem Polymeren basierend auf Vinyl-Alkohol (VOH) eine Mischung aus Ethylenvinyl-Alkohol (EVOH) und Polyvinyl-Alkohol umfasst.

9. Lebensmittelverpackung gemäß Anspruch 1 bis 8, **dadurch gekennzeichnet, dass** der Recyclingkarton mindestens 300-1000 mg/kg Mineralöl enthält.

10. Lebensmittelverpackung gemäß Anspruch 1 bis 9, **dadurch gekennzeichnet, daß** das Mineralöl MOSH- und MOAH-Anteile enthält und die MOSH-Anteile MOSH 14-24 und MOSH 24-35, und die MOAH-Anteile MOAH 14-24 und MOAH 24-35 sind.

11. Lebensmittelverpackung gemäß Anspruch 1 bis 10, **dadurch gekennzeichnet, dass** die Folie eine Barriere für die im Recyclingkarton vorhandenen Mineralöle aufweist und
• maximal 1 % der im Recyclingkarton vorhandenen MOSH 14-24 Fraktion in ein Lebensmittelsimulanz diffundieren, wenn der Anteil der Fraktion MOSH 14-24 im Mineralöl des Recyclingkartons min. 30 Gew.-% beträgt oder
• maximal 1,6% der im Recyclingkarton vorhandenen MOSH 24-35 Fraktion in ein Lebensmittelsimulanz diffundieren, wenn der Anteil der Fraktion MOSH 24-35 im Mineralöl des Recyclingkartons min. 10 Gew.-% beträgt oder
• maximal 0,5% der im Recyclingkarton vorhandenen MOAH 14-24 Fraktion in ein Lebensmittelsimulanz diffundieren, wenn der Anteil der der Fraktion MOAH 14-24 im Mineralöl des Recyclingkartons min. 10 Gew.-% beträgt oder
• maximal 3,5% der im Recyclingkarton vorhandenen MOAH 24-35 Fraktion in ein Lebensmittelsimulanz diffundieren wenn der Anteil der Fraktion MOAH 24-35 im Mineralöl des Recyclingkartons min. 1 Gew.-% beträgt.

12. Lebensmittelverpackung nach einem der Ansprüche 1 bis 11, **dadurch gekennzeichnet, daß** die Lebensmittelverpackung aus dem Karton und der Folie besteht und keine weiter Metallschicht umfasst.

## Claims

1. A foodstuff packaging comprising:
a) a foodstuff,
b) a polyolefin-based film, which encases the foodstuff,
c) a cardboard based on recycled cardboard, which encases the polyolefin-based film containing the foodstuff,
**characterised in that** the polyolefin-based film comprises at least one coating comprising (i) acrylate polymer, which is an acrylate homopolymer and/or acrylate copolymer based on methyl methacrylate and/or ethyl acrylate, wherein the amount of acrylate coating per side of the film after drying is between 0.1 and 1.5 g/m², and the thickness of this acrylate layer including the layer of the adhesion promoter is <2.0 um, and/or (ii) halogen-containing vinyl polymers and/or vinylidene polymers, wherein the amount of coating per side of the film after drying is between 2.5 and 4 g/m² for coating materials based on halogen-containing vinyl polymers and/or vinylidene polymers, wherein the above amount includes the secondary primer layer based on vinyl acetate/acrylate, and the layer thickness is 1.5 to 2.0 pm,and/or (iii) polymers based on vinyl alcohol (VOH), wherein the amount of coating per side of the film after drying is between 0.5 and 1.0 g/m² for coating materials made of polymers based on vinyl alcohol (VOH), and the layer thickness is 1 to 1.5 um, and the coating is present at least on the side of the film facing towards the cardboard based on recycled cardboard, wherein the polyolefin-based film is a biaxially oriented polypropylene film (boPP) and the film has, on one or both sides, an adhesion promoter formed from polyethylenimine, to which the coating(s) is/are applied.

2. The foodstuff packaging according to claim 1, **characterised in that** the film and/or the cardboard does not have any metallisation preventing the migration of mineral oils into the packaged foodstuff.

3. The foodstuff packaging according to claim 1, **characterised in that** the polypropylene film is multilayered and comprises a base layer containing 75 to 98 % by weight of the polyolefin in relation to the weight of the layer.

4. The foodstuff packaging according to claim 1, **characterised in that** the polypropylene film is mono-layered and contains 90 to 100 % by weight of propylene polymers of which the melting point is 120°C or more, and has a melt flow index from 1 to 10 g/10 min at 230 °C and a force of 21.6 N (DIN 53735).

5. The foodstuff packaging according to any one of claims 1 to 4, **characterised in that** the polyolefin of the film contains pigments in an amount from 0.5 to 10 % by weight.

6. The foodstuff packaging according to any one of claims 1 to 5, **characterised in that** the coating is present on both sides of the film and in each case has a total thickness between 0.4-5 µm.

7. The foodstuff packaging according to any one of claims 1 to 6, **characterised in that** the coating is multilayered and, with a coating of halogen-containing vinyl polymers and/or vinylidene polymers, initially has a secondary primer layer based on vinyl acetate/acrylate, and the layer thickness of the secondary primer layer has 50-100 % of the layer thickness of the coating formed from halogen-containing vinyl polymers and/or vinylidene polymers.

8. The foodstuff packaging according to any one of claims 1 to 7, **characterised in that** the coating material formed of a polymer based on vinyl alcohol (VOH) comprises a mixture of ethylene vinyl alcohol (EVOH) and polyvinyl alcohol.

9. The foodstuff packaging according to any one of claims 1 to 8, **characterised in that** the recycled cardboard contains at least 300-1000 mg/kg mineral oil.

10. The foodstuff packaging according to any one of claims 1 to 9, **characterised in that** the mineral oil contains MOSH and MOAH proportions, and the MOSH proportions are MOSH 14-24 and MOSH 24-35, and the MOAH proportions are MOAH 14-24 and MOAH 24-35.

11. The foodstuff packaging according to any one of claims 1 to 10, **characterised in that** the film comprises a barrier for the mineral oils present in the recycled cardboard and
• at most 1 % of the MOSH 14-24 fraction present in the recycled cardboard diffuse into a foodstuff simulant when the proportion of the MOSH 14-24 fraction in the mineral oil of the recycled cardboard is at least 30 % by weight, or
• at most 1.6 % of the MOSH 24-35 fraction present in the recycled cardboard diffuse into a foodstuff simulant when the proportion of the MOSH 24-35 fraction in the mineral oil of the recycled cardboard is at least 10 % by weight, or
• at most 0.5 % of the MOAH 14-24 fraction present in the recycled cardboard diffuse into a foodstuff simulant when the proportion of the MOAH 14-24 fraction in the mineral oil of the recycled cardboard is at least 10 % by weight, or
• at most 3.5 % of the MOAH 24-35 fraction present in the recycled cardboard diffuse into a foodstuff simulant when the proportion of the MOAH 24-35 fraction in the mineral oil of the recycled cardboard is at least 1 % by weight.

12. The foodstuff packaging according to any one of claims 1 to 11, **characterised in that** the foodstuff packaging consists of the cardboard and the film and does not comprise any further metal layer.

## Revendications

1. Emballage alimentaire, comprenant :
a) un aliment,
b) une feuille à base de polyoléfines laquelle renferme ledit aliment,
c) un cartonnage à base de carton recyclé renfermant la feuille à base de polyoléfines laquelle contient ledit aliment,
**caractérisé en ce que** la feuille à base de polyoléfines comporte au moins un revêtement comprenant (i) du polymère d'acrylate, s'agissant d'homopolymères d'acrylate et/ou de copolymères d'acrylate à base de méthacrylate de méthyle et/ou d'acrylate d'éthyle, la quantité de revêtement d'acrylate par face de ladite feuille étant comprise, après séchage, entre 0,1 et 1,5 g/m² et l'épaisseur de cette couche d'acrylate y compris la couche du promoteur d'adhérence étant < 2,0 µm, et/ou (ii) des polymères vinyliques et/ou vinylidéniques halogénés, la quantité du revêtement par face de ladite feuille étant comprise, après séchage, entre 2,5 et 4 g/m² pour des matériaux de revêtement à base de polymères vinyliques et/ou vinylidéniques halogénés, la quantité précitée comprenant également la couche de fond secondaire à base d'acétate de vinyle / acrylate, et l'épaisseur de couche étant comprise entre 1,5 et 2,0 µm et/ou (iii) des polymères à base d'alcool vinylique (VOH), la quantité de revêtement par face de ladite feuille étant comprise, après séchage, entre 0,5 et 1,0 g/m² pour des matériaux de revêtement en polymères à base d'alcool vinylique (VOH), et l'épaisseur de couche étant comprise entre 1 et 1,5 µm, et ledit revêtement étant présent au moins sur la face de ladite feuille qui est tournée vers le cartonnage à base de carton recyclé, la feuille à base de polyoléfine étant une feuille de polypropylène biaxialement orientée (boPP), et ladite feuille comportant, sur l'une de ses faces ou sur les deux, un promoteur d'adhérence en polyéthylène-imine sur lequel on applique ledit/lesdits revêtement(s).

2. Emballage alimentaire selon la revendication 1, **caractérisé en ce que** ladite feuille et/ou ledit cartonnage sont dépourvus de toute métallisation empêchant la migration d'huiles minérales dans l'aliment emballé.

3. Emballage alimentaire selon la revendication 1, **caractérisé en ce que** ladite feuille de polypropylène est de structure multicouche et comprend une couche de base contenant 75 à 98 % en poids de ladite polyoléfine, à chaque instance exprimé par rapport au poids de la couche.

4. Emballage alimentaire selon la revendication 1, **caractérisé en ce que** ladite feuille de polypropylène est monocouche et contient 90 à 100 % en poids de polymères de propylène dont le point de fusion est supérieur ou égal à 120 °C, et présente un indice de fluidité qui est compris entre 1 et 10 g/10 min., à 230 °C et à une force égale à 21,6 N (DIN 53735).

5. Emballage alimentaire selon les revendications 1 à 4, **caractérisé en ce que** la polyoléfine de ladite feuille contient des pigments dans une quantité comprise entre 0,5 et 10 % en poids.

6. Emballage alimentaire selon les revendications 1 à 5, **caractérisé en ce que** ledit revêtement est présent sur les deux faces de ladite feuille et qu'il présente, à chaque instance, une épaisseur totale comprise entre 0,4 et 5 µm.

7. Emballage alimentaire selon les revendications 1 à 6, **caractérisé en ce que** ledit revêtement est de structure multicouche et présente, s'il s'agit d'un revêtement en polymères vinyliques et/ou vinylidéniques halogénés, d'abord une couche de fond secondaire à base d'acétate de vinyle / acrylate, la couche de fond secondaire ayant une épaisseur de couche représentant 50 à 100 % de l'épaisseur de couche du revêtement en polymères vinyliques et/ou vinylidéniques halogénés.

8. Emballage alimentaire selon les revendications 1 à 7, **caractérisé en ce que** le matériau de revêtement en un polymère à base d'alcool vinylique (VOH) comprend un mélange d'éthylène-alcool vinylique (EVOH) et d'alcool polyvinylique.

9. Emballage alimentaire selon les revendications 1 à 8, **caractérisé en ce que** le carton recyclé contient au moins 300 à 1000 mg/kg d'huile minérale.

10. Emballage alimentaire selon les revendications 1 à 9, **caractérisé en ce que** ladite huile minérale contient des proportions de MOSH et MOAH et que les proportions de MOSH correspondent à MOSH 14-24 et MOSH 24-35, et les proportions de MOAH correspondent à MOAH 14-24 et MOAH 24-35.

11. Emballage alimentaire selon les revendications 1 à 10, **caractérisé en ce que** ladite feuille présente une barrière aux huiles minérales présentes dans le carton recyclé, et
• au maximum 1 % de la fraction MOSH 14-24, telle que présente dans le carton recyclé, atteindra un aliment d'essai par diffusion lorsque la proportion de la fraction MOSH 14-24 dans l'huile minérale du carton recyclé est supérieure ou égale à 30 % en poids, ou
• au maximum 1,6 % de la fraction MOSH 24-35, telle que présente dans le carton recyclé, atteindra un aliment d'essai par diffusion lorsque la proportion de la fraction MOSH 24-35 dans l'huile minérale du carton recyclé est supérieure ou égale à 10 % en poids, ou
• au maximum 0,5 % de la fraction MOAH 14-24, telle que présente dans le carton recyclé, atteindra un aliment d'essai par diffusion lorsque la proportion de la fraction MOAH 14-24 dans l'huile minérale du carton recyclé est supérieure ou égale à 10 % en poids, ou
• au maximum 3,5 % de la fraction MOAH 24-35, telle que présente dans le carton recyclé, atteindront un aliment d'essai par diffusion lorsque la proportion de la fraction MOAH 24-35 dans l'huile minérale du carton recyclé est supérieure ou égale à 1 % en poids.

12. Emballage alimentaire selon l'une des revendications 1 à 11, **caractérisé en ce que** ledit emballage alimentaire est constitué dudit cartonnage et de ladite feuille et, en outre, ne comprend pas de couche métallique.
